# EUROPÄISCHE PATENTSCHRIFT

(11) **EP 3 696 032 B1**
(45) Veröffentlichungstag und Bekanntmachung des Hinweises auf die Patenterteilung: **16.12.2020**
(21) Anmeldenummer: 20154514.2
(22) Anmeldetag: 30.01.2020
(51) Int. Cl.: B60T 1/10, B60L 7/24, B60T 7/20, B60T 13/08, F16D 61/00

(54) **FAHRZEUGANHÄNGER MIT ENERGIERÜCKGEWINNUNGSEINRICHTUNG UND HYDRAULISCHER BREMSKRAFTÜBERTRAGUNGSEINRICHTUNG**
VEHICLE TRAILER WITH ENERGY RECOVERY DEVICE AND HYDRAULIC BRAKE POWER TRANSMISSION DEVICE
REMORQUE DE VÉHICULE POURVUE DE DISPOSITIF DE RÉCUPÉRATION D'ÉNERGIE ET DISPOSITIF HYDRAULIQUE DE TRANSMISSION DE FORCE DE FREINAGE

(30) Priorität: 13.02.2019 DE 102019103628
(43) Veröffentlichungstag der Anmeldung: 19.08.2020
(73) Patentinhaber: Knott GmbH, D-83125 Eggstätt (DE)
(72) Erfinder: STRASSER, Josef, 83257 Gstadt am Chiemsee (DE)
(74) Vertreter: Flach Bauer Stahl Patentanwälte Partnerschaft mbB

(56) Entgegenhaltungen:
- DE-A1-102010 042 907
- DE-B3-102017 107 064
- DE-U1-202018 003 774
- NL-C1- 1 030 159

## Beschreibung

Die Erfindung betrifft einen Fahrzeuganhänger mit einer Energierückgewinnungseinrichtung zur Rückgewinnung von durch Bremsen des Fahrzeuganhängers erzeugter Energie gemäß dem Oberbegriff des Anspruches 1.

Fahrzeuganhänger wie beispielsweise Wohnwagen mit einer Energierückgewinnungseinrichtung sind beispielsweise aus der DE 10 2010 042 907 A1 bekannt. Der dort beschriebene Fahrzeuganhänger weist eine Auflaufbremsanlage, Antriebseinheiten in der Form von Elektromotoren, die auch als Generatoren betrieben werden können, einen Energiespeicher sowie eine elektronische Steuereinrichtung zur Steuerung der Energiegewinnungseinrichtung auf. Die Bewegungsenergie beim Bremsen des Fahrzeuganhängers wird in elektrische Energie umgewandelt und im Energiespeicher gespeichert. Die Energieumwandlung kann dort in Abhängigkeit der im Bereich der Deichsel auftretenden Schub- oder Zugkraft erfolgen. Die gespeicherte Energie kann beim Beschleunigen des Gespannes das Zugfahrzeug entlasten und so den Kraftstoffverbrauch und den Schadstoffausstoß reduzieren. Auch beim Manövrieren des Anhängers im abgekuppelten Zustand kann diese Energie gut genutzt werden. Gleichzeitig kann auch bei schlingerndem Fahrzeuganhänger durch gezielten Bremseingriff das Gespann gestreckt und stabilisiert werden.

Die im Generatorbetrieb in den Antriebseinheiten auftretenden Bremskräfte können zum Abbremsen des Fahrzeuganhängers genutzt werden. Allerdings sind die Bremskräfte des rekuperativen Bremssystems allein meist nicht ausreichend, um bei allen Bedingungen, insbesondere bei starken Abbremsungen, die gesetzlichen Vorgaben zu erreichen. Hierzu wären überdimensionale Generatoren Motoren notwendig, welche sehr schwer und sehr teuer sind. Diese würden neben hohen Kosten eine extreme Reduktion der Nutzlast des Fahrzeuganhängers bedeuten. Darüber hinaus besteht der Gesetzgeber auf Elemente mit rein mechanischer Wirkung für die Feststellbremse. Ein weiteres Problem bei rekuperativen Bremssystemen besteht darin, dass dann, wenn beispielsweise während einer längeren Pass-Abfahrt der rekuperative Energiespeicher vollgeladen ist, dieser keine weitere Energie mehr aufnehmen kann. Die Abführung dieser überschüssigen Energie, beispielsweise über einen Heizwiderstand an die Umgebung, ist jedoch nicht immer in vollumfänglichem Maß möglich. Das zusätzliche Zuspannen der Betriebsbremsen (Reibbremsen) ist mit erheblichem Steuerungsaufwand verbunden. Weiterhin müsste die elektronische Steuerungseinrichtung aufgrund natürlicher Unebenheiten realer Straßen extrem schnell sein, um die zulässigen Deichselkräfte am Kuppelpunkt zum Zugfahrzeug einzuhalten.

Um diese Nachteile zu vermeiden, ist aus der DE 10 2017 107 064 B3 ein Fahrzeuganhänger mit Energiegewinnungseinrichtung gemäß dem Oberbegriff des Anspruchs 1 bekannt. Dieser bekannte Fahrzeuganhänger weist eine an der Deichsel angeordnete Kraftmesseinrichtung zur Messung der axialen Deichselkräfte auf. Weiterhin ist dort eine mit der Zugstange zusammenwirkende Klemmeinrichtung vorgesehen, die bei Vorwärtsfahrt des Fahrzeuganhängers das Einschieben der Zugstange in das Deichselgehäuse bei einer Deichselschubkraft unterhalb eines bestimmten Deichselschubkraftgrenzwertes blockiert und oberhalb dieses Deichselschubkraftgrenzwertes ermöglicht. Mittels dieser Klemmeinrichtung wird somit das Einschieben der Zugstange in das Deichselgehäuse bei geringen Deichselschubkräften blockiert, so dass das Bremsen des Fahrzeuganhängers in diesem Fall ausschließlich über die Rekuperationsbremse, das heißt über die Bremswirkung der in den Generatormodus geschalteten Energierückgewinnungseinrichtung, erfolgt. Überschreitet bei einer starken Bremsung die in der Deichsel auftretende Schubkraft den Deichselschubkraftgrenzwert, ermöglicht die Klemmeinrichtung dagegen das Einschieben der Zugstange in das Deichselgehäuse, so dass die Radbremsen über die Auflaufbremsanlage zugespannt werden können. Die Bremskraft der Rekuperationsbremse wird in diesem Fall somit durch die Radbremsen unterstützt. Mit diesem bekannten Bremssystem kann eine hohe Bremssicherheit bei einem Ausfall der Rekuperationsbremse oder bei deren Abschaltung im Fall eines vollen Energiespeichers erreicht werden.

Hiervon ausgehend, liegt der Erfindung die Aufgabe zugrunde, einen eine Energierückgewinnungseinrichtung aufweisenden Fahrzeuganhänger mit einem Bremssystem gemäß dem Oberbegriff des Anspruches 1 zu schaffen, das einen möglichst geringen Steuerungsaufwand erfordert, bei starken Bremsungen besonders zuverlässig arbeitet und bei Bremssystemen mit hydraulischer Bremskraftübertragungseinrichtung auf einfache und kostengünstige Weise realisierbar ist.

Diese Aufgabe wird erfindungsgemäß durch einen Fahrzeuganhänger mit den Merkmalen des Anspruchs 1 gelöst. Vorteilhafte Ausführungsformen der Erfindung sind in den weiteren Ansprüchen beschrieben.

Bei dem erfindungsgemäßen Fahrzeuganhänger weist die hydraulische Bremskraftübertragungseinrichtung ein Umschaltventil zur Aktivierung und Deaktivierung der Auflaufbremsanlage auf, das bei ordnungsgemäßer Funktion der Energierückgewinnungseinrichtung, Vorwärtsfahrt des Fahrzeuganhängers und einer Deichselschubkraft unterhalb eines bestimmten Deichselschubkraftgrenzwertes in eine Sperrstellung geschaltet wird, in der es die Bremsleitung zwischen dem Bremszylinder und den Radbremsen verschließt, während es bei Vorwärtsfahrt und einer Deichselschubkraft oberhalb dieses Deichselschubkraftgrenzwertes in eine Durchflussstellung geschaltet wird, in der die Bremsleitung zur Übertragung von Bremsdruck zu den Radbremsen geöffnet ist.

Mithilfe der Erfindung wird ein elektronisches rekuperatives Bremssystem mit einer Auflaufbremsanlage in besonders vorteilhafter Weise kombiniert, indem die Übertragung von Bremsdruck vom Bremszylinder zu den Radbremsen mittels eines Umschaltventils blockiert bzw. freigegeben wird, das die hydraulische Bremsleitung zwischen dem Bremszylinder und den Radbremsen in Abhängigkeit der auftretenden Deichselschubkräfte schließt bzw. freigibt. Durch diese einfach zu realisierende Maßnahme kann auf eine Klemmeinrichtung, wie in der DE 10 2017 107 064 B3 beschrieben, verzichtet werden. Die bei einem derartigen Klemmsystem vorhandene Abhängigkeit von Reibwerten zwischen der Zugstange und der Klemmeinrichtung entfällt. Weiterhin ist erfindungsgemäß das Deaktivieren bzw. Aktivieren der Auflaufbremsanlage auf einfache und kostengünstige Weise sowie mit besonders hoher Zuverlässigkeit möglich.

Gemäß einer vorteilhaften Ausführungsform besteht das Umschaltventil aus einem federrückstellbaren elektromagnetischen Mehrwegeventil, dass bei Bestromung in die die Übertragung des Bremsdrucks zu den Radbremsen blockierende Sperrstellung und ohne Bestromung durch eine Federrückstellkraft in die die Übertragung des Bremsdrucks zu den Radbremsen ermöglichende Durchflussstellung bringbar ist. Auf diese Weise wird eine hohe Betriebssicherheit gewährleistet, da bei einem Ausfall der Stromversorgung das Umschaltventil durch eine Rückstellfeder mechanisch in die Durchflussstellung zurückgestellt wird, in welcher die Auflaufbremsanlage aktiv ist.

Gemäß einer vorteilhaften Ausführungsform umfasst die elektronische Steuereinrichtung eine Ventilsteuerung zur Steuerung des Umschaltventils und eine Rekuperationssteuerung zur Steuerung der Energierückgewinnung, wobei die Ventilsteuerung bei einer mangelhaften Funktion der Energierückgewinnungseinrichtung bei Vorwärtsfahrt des Fahrzeuganhängers das Umschaltventil in die die Übertragung des Bremsdrucks zu den Radbremsen ermöglichende Durchflussstellung schaltet.

Unter "mangelhafter Funktion" werden im Rahmen der vorliegenden Erfindung Zustände der Energierückgewinnungseinrichtung verstanden, bei denen die Energierückgewinnungseinrichtung und/oder Teile ihrer elektronischen Steuereinrichtung nicht ordnungsgemäß arbeiten, so dass die Ventilsteuerung kein oder kein ordnungsgemäßes Signal von der Rekuperationssteuerung erhält. Wird eine mangelhafte Funktion erkannt und befindet sich der Fahrzeuganhänger in Vorwärtsfahrt, schaltet die Ventilsteuerung das Umschaltventil in seine Durchflusstellung, so dass die Auflaufbremsanlage aktiv ist und eine hohe Betriebssicherheit auch bei Ausfall des Rekuperationssystems gewährleistet ist. Wird dagegen eine mangelhafte Funktion des Rekuperationssystems bei Stillstand oder Rückwärtsfahrt des Fahrzeuganhängers erkannt, wird das Umschaltventil in die Sperrstellung geschaltet und damit die Auflaufbremsanlage deaktiviert. Eine Rückwärtsfahrt des Fahrzeuganhängers ist damit ohne weiteres möglich, da unabhängig von der Größe der Deichselschubkräfte das Rückwärtsfahren nicht durch die Auflaufbremsanlage blockiert wird.

Sollten sämtliche elektrischen Systeme des Fahrzeuganhängers ausfallen, wird das Umschaltventil auch bei Rückwärtsfahrt des Fahrzeuganhängers aufgrund der Federrückstellung in die geöffnete Durchflussstellung gedrückt und damit die Auflaufbremsanlage aktiviert, das heißt die Übertragung von Bremsdruck vom Bremszylinder auf die Radbremsen ermöglicht. Um auch in diesem Fall ein Zurücksetzen des Fahrzeuganhängers zu ermöglichen, ist zweckmäßigerweise an der Auflaufbremsanlage eine zusätzliche mechanische Rückfahrsperre angeordnet, welche in bekannter Weise das Einschieben der Zugstange in das Deichselgehäuse verhindert.

Vorteilhafterweise weist der Fahrzeuganhänger eine mit der elektronischen Steuereinrichtung verbundene Radareinrichtung zur Erkennung von Vorwärtsfahrt, Stillstand und Rückwärtsfahrt des Fahrzeuganhängers auf. Diese Radareinrichtung ermittelt durch Abtastung des Bodens den Fahrzustand und übermittelt die entsprechenden Fahrzustand-Signale an die elektronische Steuereinrichtung.

Vorteilhafterweise ist die Radareinrichtung in oder an einem Gehäuse angeordnet, in dem auch das Umschaltventil angeordnet ist. Eine getrennte Anordnung von Radareinrichtung und Umschaltventil ist jedoch ebenfalls ohne weiteres möglich.

Die Erfindung wird nachfolgend anhand der Zeichnungen beispielhaft näher erläutert. Es zeigen:
- Figur 1:: eine teilweise schematische Seitenansicht des erfindungsgemäßen Fahrzeuganhängers,
- Figur 2:: die Einzelheit II von den Figuren 1 und 4 in vergrößerter Darstellung,
- Figur 3:: eine schematische Darstellung einer Ventilbaupruppe mit einem Umschaltventil und einem Restdruckventil gemäß der Erfindung,
- Figur 4:: einen Teil der Deichsel von Figur 1 in vergrößerter Darstellung,
- Figur 5:: eine schematische Darstellung des erfindungsgemäßen Fahrzeuganhängers von oben mit schematischer Darstellung verschiedener Komponenten des Bremssystems, und
- Figur 6:: die Einzelheit VI von Figur 5 in vergrößerter Darstellung.

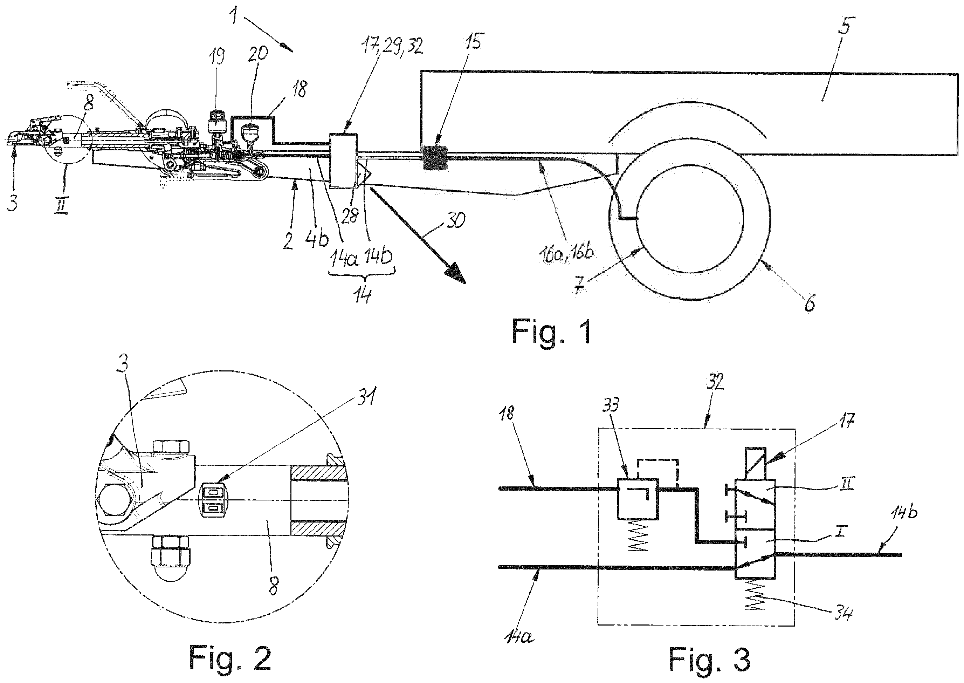

Aus den Figuren 1, 4 und 5 ist ein Fahrzeuganhänger 1 ersichtlich, der eine Deichsel 2 mit einer Kupplungseinheit 3 und einem Deichselgehäuse 4a aufweist. Die Kupplungseinheit 3 kann beispielsweise als Kugelkopfkupplung ausgebildet sein und dient zum Ankuppeln des Fahrzeuganhängers 1 an ein nicht dargestelltes Zugfahrzeug. Das Deichselgehäuse 4a ist im gezeigten Ausführungsbeispiel starr über Deichselarme oder Zugholme 4b mit einem Aufbau 5 des Fahrzeuganhängers 1 verbunden.

Der Fahrzeuganhänger 1 weist weiterhin Räder 6 mit Radbremsen 7 auf, die als Reibbremsen, beispielsweise Trommelbremsen, ausgebildet sind. Um diese Radbremsen 7 zu betätigen, ist der Fahrzeuganhänger 1 mit einer Auflaufbremsanlage ausgestattet. Diese Auflaufbremsanlage umfasst in bekannter Weise eine Zugstange 8, die längsverschiebbar im Deichselgehäuse 4a angeordnet und fest mit der Kupplungseinheit 3 verbunden ist. Wird das Zugfahrzeug abgebremst, wird die Zugstange 8 bei aktivierter Auflaufbremsanlage aufgrund der auflaufenden trägen Masse des Fahrzeuganhängers 1 in das Deichselgehäuse 4a eingeschoben. Ein hinteres Ende 9 der Zugstange 8 schwenkt dabei einen Bremshebel 10 im Uhrzeigersinn um eine Schwenkachse 11 und verschiebt dabei einen daran angelenkten Kolben 12 eines hydraulischen Bremszylinders 13 in Längsrichtung nach hinten, wodurch in bekannter Weise Druck im hydraulischen Bremssystem aufgebaut werden kann und die Radbremsen 7 zugespannt werden können.

Die Übertragung des Bremsdrucks erfolgt mittels einer hydraulischen Bremsübertragungseinrichtung, die in den Figuren 1, 4 und 5 schematisch dargestellt ist. Diese hydraulische Bremsübertragungseinrichtung umfasst eine an den Bremszylinder 13 angeschlossene hydraulische Bremsleitung 14, die sich an einer Abzweigung 15 in Zweigleitungen 16a, 16b gabelt, die zu den Radbremsen 7 führen. In der Bremsleitung 14 befindet sich ein später noch näher erläutertes Umschaltventil 17. Das Umschaltventil 17 unterteilt die Bremsleitung 14 in einen vorderen Bremsleitungsabschnitt 14a, der an den Bremszylinder 13 angeschlossen ist, und einen hinteren Bremsleitungsabschnitt 14b, der zu den Zweigleitungen 16a, 16b führt.

Die hydraulische Bremskraftübertragungseinrichtung umfasst ferner eine Rücklaufleitung 18, die einerseits in einen im Bereich des Bremszylinders 13 angeordneten Bremsflüssigkeit-Vorratsbehälter 19 und andererseits in das Umschaltventil 17 mündet. Über diese Rücklaufleitung 18 kann beim Lösen der Radbremsen 7 Bremsflüssigkeit über die Zweigleitungen 16a, 16b, Bremsleitung 14 und das Umschaltventil 17 zurück in den Bremsflüssigkeits-Vorratsbehälter 19 strömen.

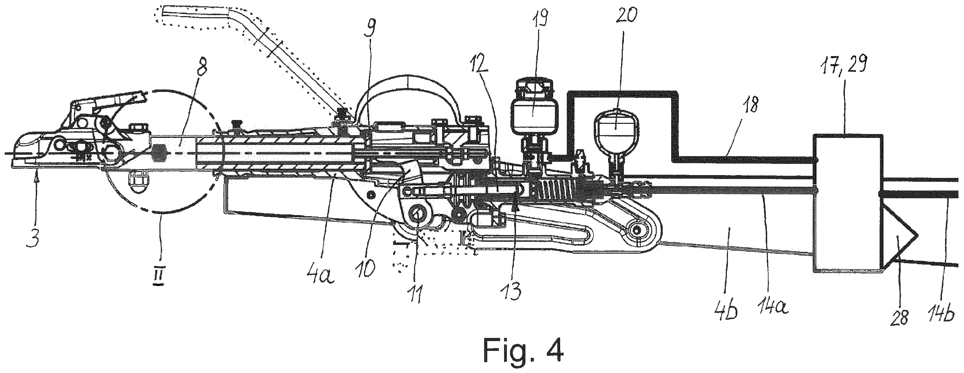

Wie insbesondere aus Figur 4 hervorgeht, umfasst die hydraulische Bremskaftübertragungseinrichtung ferner einen Bremsflüssigkeitsspeicher 20, der im hinteren Endbereich des Bremszylinders 13 vorgesehen ist und zum Abfangen von Druckspritzen im hydraulischen Bremssystem dient.

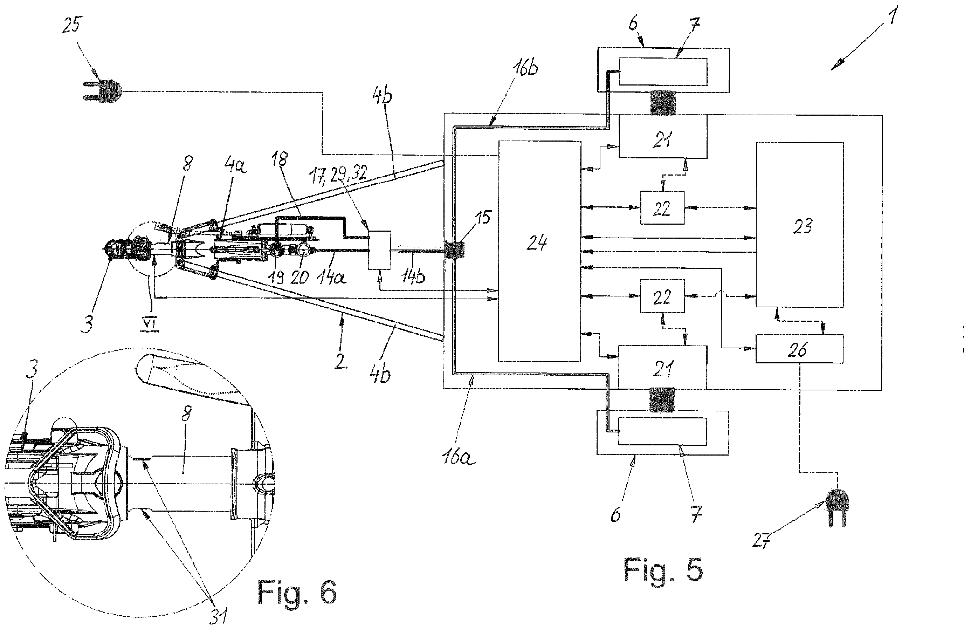

Der Fahrzeuganhänger 1 ist mit einem rekuperativen Bremssystem ausgestattet, das heißt mit einer Energierückgewinnungseinrichtung zur Rückgewinnung von durch Bremsen des Fahrzeuganhängers 1 erzeugter Energie. Diese Energierückgewinnungseinrichtung wird im Folgenden anhand von Figur 5 beispielhaft näher erläutert.

Die Energierückgewinnungseinrichtung umfasst für jedes Rad 6 eine mit dem Rad 6 in Antriebsverbindung stehende Antriebseinheit 21 in der Form eines Elektromotors, die bzw. der auch als Generator betrieben werden kann. Jede Antriebseinheit 21 ist über eine Leistungselektronik 22 mit einem Energiespeicher 23 des Fahrzeuganhängers 1 verbunden. Der Energiespeicher 23 dient somit zur Speicherung der von den Antriebseinheiten 21 im Generatorbetrieb erzeugten elektrischen Energie. Vorzugsweise handelt es sich beim Energiespeicher 23 um einen Akkumulator. Andere Energiespeicher 23, beispielsweise Superkondensatoren, sind ebenfalls denkbar.

Der Fahrzeuganhänger 1 weist ferner eine elektronische Steuereinrichtung 24 auf, die eine Rekuperationssteuerung zur Steuerung und Überwachung der Energierückgewinnungseinrichtung und eine Ventilsteuerung zur Steuerung des Umschaltventils 17 umfasst. Hierzu sind die Leistungselektroniken 22, die Antriebseinheiten 21 und das Umschaltventil 17 über entsprechende Steuer- und Signalleitungen mit der Steuereinrichtung 24 verbunden.

Wie aus Figur 5 weiterhin ersichtlich, kann das elektrische System des Fahrzeuganhängers 1 und insbesondere die Steuereinrichtung 24 mittels einer elektrischen Leitung und eines Steckers 25 mit einer nicht dargestellten Energieversorgung des Zugfahrzeugs verbunden werden. Weiterhin kann der Fahrzeuganhänger 1 auch ein Ladegerät 26 aufweisen, das mittels einer Leitung und eines Steckers 27 an eine externe Energieversorgungseinrichtung angeschlossen und von der Steuereinrichtung 24 derart angesteuert werden kann, dass es den Energiespeicher 23 über die externe Energieversorgungseinrichtung lädt.

Der Fahrzeuganhänger 1 umfasst weiterhin eine Fahrzustandserkennungseinrichtung in der Form einer Radareinrichtung 28, mit der die Fahrzustände Vorwärtsfahrt, Stillstand und Rückwärtsfahrt des Fahrzeuganhängers 1 erkannt werden können. Die Radareinrichtung 28 ist zweckmäßigerweise, wie schematisch dargestellt, in oder an einem Gehäuse 29 einer Ventilbaugruppe 32 angeordnet, in dem auch das Umschaltventil 27 angeordnet ist. Zweckmäßigerweise befindet sich die Radareinrichtung 28 hierbei an der Rückseite des Gehäuses 29, das heißt auf der in Fahrtrichtung bei Vorwärtsfahrt hinten liegenden Seite, wodurch die Radareinrichtung 28 besser vor Verschmutzung geschützt ist. Die Radareinrichtung 28 ist derart ausgerichtet, dass die Radarwellen, die in Figur 1 schematisch mit dem Pfeil 30 gekennzeichnet sind, nach unten auf den Boden gerichtet sind. Hierdurch kann durch Bodenabtastung durch die Radarwellen Vorwärtsfahrt, Stillstand und Rückwärtsfahrt des Fahrzeuganhängers 1 erkannt werden. Weiterhin ist die Radareinrichtung 28 mit der elektronischen Steuereinrichtung 24 elektrisch verbunden, um das Umschaltventil 17 auch in Abhängigkeit des Fahrzustandes zu schalten.

Wie insbesondere aus den Figuren 2 und 6 ersichtlich, weist der Fahrzeuganhänger 1 weiterhin eine Kraftmesseinrichtung 31 zur Messung der axialen Deichselkräfte auf. Diese Kraftmesseinrichtung 31 steht, wie aus Figur 5 ersichtlich, mit der Steuereinrichtung 24 in elektrischer Verbindung, um das Umschaltventil 17 auch in Abhängigkeit der Deichselschubkräfte zu schalten.

Wie insbesondere aus den Figuren 2 und 6 ersichtlich, umfasst die Kraftmesseinrichtung 31 insbesondere Dehnmessstreifen, die beidseitig an der Zugstange 8 und insbesondere in der neutralen Faser angeordnet sind. Zusätzlich kann die Kraftmesseinrichtung auch derart ausgebildet sein, dass auch in der Zugstange 8 auftretende Biegekräfte gemessen werden, um bei Kurvenfahrt Motor - drehmomente zu regeln. Andere Ausbildungen für Kraftmesseinrichtungen 31 sind jedoch möglich.

Im Folgenden wird anhand von Figur 3 die Ventilbaupruppe 32 näher erläutert. Diese Ventilbaupruppe 32 umfasst zusätzlich zum Umschaltventil 17 eine Restdruckhalteeinrichtung in der Form eines Restdruckventils 33, welches den Rückfluss der Bremsflüssigkeit durch die Rücklaufleitung 18 hindurch nur dann freigibt, wenn der Druck innerhalb der Rücklaufleitung 18 und damit innerhalb des hinteren Bremsleistungsabschnittes 14b oberhalb eines vorher eingestellten Minimal-Druckwertes liegt.

Beim Umschaltventil 17 handelt es sich um ein elektromagnetisch betätigbares Mehrwegeventil in der Form eines 3/2 - Wegeventils, das drei Anschlüsse aufweist, die zwei unterschiedliche Schaltstellungen I und II einnehmen können.

In der in Figur 3 dargestellten Stellung befindet sich das Umschaltventil 17 in der Schaltstellung I, die eine Durchflussstellung darstellt, in welcher das Umschaltventil 17 nicht bestromt und durch eine Feder 34 rückgestellt ist. In dieser Schaltstellung I ist die Auflaufbremsanlage aktiviert. Diese Schaltstellung I nimmt das Umschaltventil 17 bei Vorwärtsfahrt des Fahrzeuganhängers 1 ein, wenn die von der Kraftmesseinrichtung 31 gemessene Deichselschubkraft oberhalb eines bestimmten Deichselschubkraftgrenzwertes liegt. Der vordere Bremsleitungsabschnitt 14a ist dabei mit dem hinteren Bremsleitungsabschnitt 14b verbunden, so dass die Bremsflüssigkeit vom Bremszylinder 13 zu den Radbremsen 7 und zurückfließen kann. Wird die Auflaufbremseinrichtung durch Bremsen des Zugfahrzeuges zusammengeschoben, wird Bremsflüssigkeit vom Bremszylinder 13 zu den Radbremsen 7 gepumpt, wodurch die Radbremsen 7 aktiviert werden. Beendet das Zugfahrzeug den Bremsvorgang, so dass die Auflaufeinrichtung wieder auseinandergezogen wird und sich der Kolben 12 wieder nach vorne bewegen kann, fließt die Bremsflüssigkeit von den Radbremsen 7 über die Zweigleitungen 16a, 16b und die Bremsleitung 14 zum Bremszylinder 13 in bekannter Weise zurück. Bei Vorwärtsfahrt ist das Restdruckventil 33 inaktiv und die Rücklaufleitung 18 wird durch das Umschaltventil 17 gesperrt.

Ist die von der Kraftmesseinrichtung 31 gemessene Deichselschubkraft bei Vorwärtsfahrt unterhalb des in der Steuereinrichtung 24 gespeicherten Deichselschubkraftgrenzwertes, der beispielsweise 10 bis 30 % der Gewichtskraft des Fahrzeuganhängers betragen kann, ist es ausreichend, wenn der Fahrzeuganhänger 1 allein über die Rekuperationsbremse, das heißt über die sich im Generatorbetrieb befindenden Antriebseinheiten 21, abgebremst wird. Die Auflaufbremseinrichtung wird zu diesem Zweck deaktiviert. Diese Deaktivierung erfolgt dadurch, dass das Umschaltventil 17 bestromt wird, wodurch dieses in die Schaltstellung II geschaltet wird, die eine Sperrstellung für die Bremsleitung 14 darstellt. In der Schaltstellung II ist die Bremsleitung 14 durch das Umschaltventil 17 geschlossen, so dass an den Radbremsen 7 kein Bremsdruck aufgebaut werden kann.

Bei Rückwärtsfahrt (und zweckmäßigerweise auch bei Stillstand des Fahrzeuganhängers 1) wird das Umschaltventil 17 bestromt und dadurch ebenfalls in die Schaltstellung II geschaltet, in welcher die Bremsleitung 14 gesperrt ist. Gleichzeitig ist die Rücklaufleitung 18, in der sich das Restdruckventil 33 befindet, mit dem hinteren Bremsleitungsabschnitt 14b verbunden. Wie bereits ausgeführt, gibt das Restdruckventil 33 den Rückfluss der Bremsflüssigkeit durch die Rücklaufleitung 18 hindurch nur dann frei, wenn der Druck innerhalb der Rücklaufleitung 18 oberhalb eines vorher eingestellten Minimaldruckwertes liegt. Dieser Minimaldruckwert entspricht zweckmäßigerweise demjenigen Druck, bei dem die Bremsbeläge gerade noch an den Reibflächen der Bremse anliegen, aber kaum mehr Bremsmoment erzeugen. Fließt dagegen aufgrund der Bewegung, welcher die Bremselemente beim Lösen der Radbremsen 7 ausführen, soviel Bremsflüssigkeit zurück in den Bremsflüssigkeits-Vorratsbehälter 19, dass der Flüssigkeitsdruck in der Rücklaufleitung 18 den Minimaldruckwert unterschreitet, schließt das Restdruckventil 33, so dass das weitere Zurückfließen der Bremsflüssigkeit unterbunden wird. Ein unerwünschter Volumenverlust im hinteren Bremsleitungsabschnitt 14b und in den Zweigleitungen 16a, 16b, der bei einem wiederholten Zurücksetzen des Anhängers und durch wiederholtes Zurückpumpen der Bremsflüssigkeit in den Bremsflüssigkeits-Vorratsbehälter 19 auftreten könnte, wird dadurch vermieden. Es besteht daher keine Gefahr, dass der Bremszylinder 13 beim wiederholten Zurücksetzen des Fahrzeuganhängers 1 leer gepumpt wird und bei einem darauffolgenden Bremsvorgang nicht sofort genügend Bremsdruck an den Radbremsen 7 zur Verfügung steht.

Die elektronischen Elemente für die Ventil- und Rekuperationssteuerung können, müssen jedoch nicht an der gleichen Stelle des Fahrzeuganhängers 1 angeordnet sein. Beispielsweise ist es möglich, dass die Ventilsteuerung im Gehäuse 29 der Ventilbaugruppe 32 angeordnet ist, während die elektronischen Komponenten der Rekuperationssteuerung an anderer Stelle des Fahrzeuganhängers angeordnet sind.

Die Ventilsteuerung ist derart ausgebildet, dass dann, wenn von der Rekuperationssteuerung signalisiert wird, dass hinsichtlich der Rekuperation alles in Ordnung ist, das Umschaltventil 17 in der vorstehend beschriebenen Weise geschaltet wird. Dies bedeutet, dass bei ordnungsgemäßer Funktion der Energierückgewinnungseinrichtung bei Vorwärtsfahrt
- die Auflaufbremsanlage bei einer Deichselschubkraft unterhalb eines bestimmten Deichselschubkraftgrenzwertes deaktiviert ist (Schaltstellung II des Umschaltventils 17),
- die Auflaufbremsanlage bei einer Deichselschubkraft oberhalb des Deichselschubkraftgrenzwertes aktiviert ist (Schaltstellung I des Umschaltventils 17),
während bei Rückwärtsfahrt die Auflaufbremsanlage immer deaktiviert bleibt (Schaltstellung II des Umschaltventils 17). Vorzugsweise bleibt die Auflaufbremsanlage auch bei Stillstand des Fahrzeuganhängers 1 deaktiviert.

Es ist auch möglich, durch eine geeignete, beispielsweise gepulste Ventilansteuerung oder die Verwendung eines Proportionalventiles einen sanften Übergang von einer reinen Rekuperationsbremsung zu einer Bremsung unter ausschließlicher oder zusätzlicher Mitwirkung der Radbremsen (Reibungsbremsen) zu realisieren,
Erhält die Ventilsteuerung dagegen von der Rekuperationssteuerung kein Signal oder ein Signal, aus dem hervorgeht, dass die Rekuperationseinrichtung nicht ordungsgemäß funktioniert, wird das Umschaltventil 17 bei Vorwärtsfahrt nicht nur oberhalb des Deichselschubkraftgrenzwertes, sondern auch unterhalb dieses Deichselschubkraftgrenzwertes in die Schaltstellung I geschaltet, in welcher die Auflaufbremsanlage aktiv ist. Das Umschaltventil 17 wird bei nicht ordnungsgemäßer Rekuperationseinrichtung nur bei erkanntem Stillstand oder erkannter Rückwärtsfahrt in die Sperrstellung (Schaltstellung II) geschaltet, in welcher die Auflaufbremsanlage deaktiviert ist.

Wenn sowohl die Ventilsteuerung als auch die Rekuperationsteuerung ausfallen, wird das Umschaltventil 17 durch die Feder 34 in die geöffnete Schaltstellung I gedrückt, so dass die Auflaufbremsanlage auch beim Zurücksetzen des Gespanns aktiv bleiben und die Rückfahrbewegung behindern würde. Für diesen Fall ist eine weitere, nicht dargestellte Sperreinrichtung vorgesehen, welche die Auflaufbremsanlage deaktivieren kann, beispielsweise eine mechanische Rückfahrsperre, welche in bekannter Weise das Einschieben der Zugstange 8 in das Deichselgehäuse 4a verhindert.

## Patentansprüche

1. Fahrzeuganhänger (1) mit
- einer Energierückgewinnungseinrichtung zur Rückgewinnung von durch Bremsen des Fahrzeuganhängers (1) erzeugter Energie,
- einer Auflaufbremsanlage, die einen hydraulischen Bremszylinder (13) und eine hydraulische Bremskraftübertragungseinrichtung umfasst, die eine Bremsleitung (14) zur Übertragung von vom Bremszylinder (13) erzeugtem Bremsdruck auf Radbremsen (7) aufweist,
- einer elektronischen Steuereinrichtung (24),
- einer mit der Steuereinrichtung (24) in elektrischer Verbindung stehenden Kraftmesseinrichtung zur Messung von axialen Deichselkräften,
**dadurch gekennzeichnet, dass** die hydraulische Bremskraftübertragungseinrichtung ein Umschaltventil (17) zur Aktivierung und Deaktivierung der Auflaufbremsanlage aufweist, das bei ordnungsgemäßer Funktion der Energierückgewinnungseinrichtung, Vorwärtsfahrt des Fahrzeuganhängers und einer Deichselschubkraft unterhalb eines bestimmten Deichselschubkraftgrenzwertes von der Steuereinrichtung in eine Sperrstellung geschaltet wird, in der es die Bremsleitung (14) zwischen dem Bremszylinder (13) und den Radbremsen (7) verschließt, während es bei Vorwärtsfahrt und einer Deichselschubkraft oberhalb dieses Deichselschubkraftgrenzwertes von der Steuereinrichtung in eine Durchflussstellung geschaltet wird, in der die Bremsleitung (14) zur Übertragung von Bremsdruck zu den Radbremsen (7) geöffnet ist.

2. Fahrzeuganhänger (1) nach Anspruch 1, **dadurch gekennzeichnet, dass** das Umschaltventil (17) aus einem federrückstellbaren elektromagnetischen Mehrwegeventil besteht, das bei Bestromung in die die Übertragung des Bremsdrucks zu den Radbremsen (7) blockierende Sperrstellung und ohne Bestromung durch eine Federrückstellkraft in die die Übertragung des Bremsdrucks zu den Radbremsen (7) ermöglichende Durchflussstellung bringbar ist.

3. Fahrzeuganhänger nach Anspruch 1 oder 2, **dadurch gekennzeichnet, dass** die elektronische Steuereinrichtung (24) eine Ventilsteuerung zur Steuerung des Umschaltventils (17) und eine Rekuperationssteuerung zur Steuerung der Energierückgewinnung umfasst, wobei die Ventilsteuerung bei einer mangelhaften Funktion der Energierückgewinnungseinrichtung bei Vorwärtsfahrt des Fahrzeuganhängers (1) das Umschaltventil (17) in die die Übertragung des Bremsdrucks zu den Radbremsen (7) ermöglichende Durchflussstellung schaltet.

4. Fahrzeuganhänger nach Anspruch 3, **dadurch gekennzeichnet, dass** die Steuereinrichtung (24) bei Stillstand oder Rückwärtsfahrt des Fahrzeuganhängers (1) das Umschaltventil (17) in die die Übertragung des Bremsdrucks zu den Radbremsen (7) blockierende Sperrstellung schaltet, wenn eine mangelhafte Funktion der Energierückgewinnungseinrichtung erkannt wird.

5. Fahrzeuganhänger nach einem der vorhergehenden Ansprüche, **dadurch gekennzeichnet, dass** der Fahrzeuganhänger (1) eine mit der elektronischen Steuereinrichtung (24) verbundene Radareinrichtung (28) zur Erkennung von Vorwärtsfahrt, Stillstand und Rückwärtsfahrt des Fahrzeuganhängers (1) aufweist.

6. Fahrzeuganhänger nach Anspruch 5, **dadurch gekennzeichnet, dass** die Radareinrichtung (28) in oder an einem Gehäuse (29) angeordnet ist, in dem auch das Umschaltventil (17) angeordnet ist.

7. Fahrzeuganhänger nach einem der vorhergehenden Ansprüche, **dadurch gekennzeichnet, dass** das Umschaltventil (17) an eine zu einem Bremsflüssigkeit-Vorratsbehälter (19) führende Rücklaufleitung (18) angeschlossen ist, wobei das Umschaltventil (17) eine Verbindung zwischen der Rücklaufleitung (18) und der Bremsleitung (14) sperrt, wenn sich das Umschaltventil (17) in der die Übertragung von Bremsdruck auf die Radbremsen (7) ermöglichenden Durchflussstellung befindet, und dabei das Umschaltventil (17) die Rücklaufleitung (18) mit der Bremsleitung (14) verbindet, wenn sich das Umschaltventil (17) in der die Übertragung von Bremsdruck auf die Radbremsen (7) blockierenden Sperrstellung befindet.

## Claims

1. Vehicle trailer (1) comprising
- an energy recovery device for recovering energy generated by braking the vehicle trailer (1),
- an overrun brake which comprises a hydraulic brake cylinder (13) and a hydraulic braking force transmission device which has a brake line (14) for transmitting brake pressure generated by the brake cylinder (13) to wheel brakes (7),
- an electronic control device (24),
- a force measuring device which is electrically connected to the control device (24) for measuring axial drawbar forces,
**characterised in that** the hydraulic braking force transmission device has a switching valve (17) for activating and deactivating the overrun brake, which valve, when the energy recovery device is functioning correctly, the vehicle trailer is travelling forwards and a drawbar thrust force is below a particular drawbar thrust force limit, is switched by the control device into a locking position in which it closes the brake line (14) between the brake cylinder (13) and the wheel brakes (7), whereas, when said trailer travels forwards with a drawbar thrust force above said drawbar thrust force limit, said valve is switched by the control device into a through-flow position in which the brake line (14) is open in order to transmit brake pressure to the wheel brakes (7).

2. Vehicle trailer (1) according to claim 1, **characterised in that** the switching valve (17) consists of a spring-restorable electromagnetic multi-way valve which, when energised, can be brought into the locking position which blocks the transmission of the brake pressure to the wheel brakes (7) and, when not energised, can be brought into the through-flow position which allows the transmission of the brake pressure to the wheel brakes (7) by means of a spring-restoring force.

3. Vehicle trailer according to either claim 1 or claim 2, **characterised in that** the electronic control device (24) comprises a valve control for controlling the switching valve (17) and a recuperation control for controlling the energy recovery, and, if the energy recovery device is not functioning correctly when the vehicle trailer (1) is travelling forwards, the valve control switching the switching valve (17) into the through-flow position which allows the transmission of the brake pressure to the wheel brakes (7).

4. Vehicle trailer according to claim 3, **characterised in that** the control device (24) switches the switching valve (17) into the locking position which blocks the transmission of the brake pressure to the wheel brakes (7) if the energy recovery device is identified as not functioning correctly when the vehicle trailer (1) is at a standstill or reversing.

5. Vehicle trailer according to any of the preceding claims, **characterised in that** the vehicle trailer (1) has a radar device (28) connected to the electronic control device (24) for identifying forward travel, standstill and reverse travel of the vehicle trailer (1).

6. Vehicle trailer according to claim 5, **characterised in that** the radar device (28) is arranged in or on a housing (29) in which the switching valve (17) is also arranged.

7. Vehicle trailer according to any of the preceding claims, **characterised in that** the switching valve (17) is connected to a return line (18) leading to a brake fluid reservoir (19), the switching valve (17) locking a connection between the return line (18) and the brake line (14) when the switching valve (17) is in the through-flow position which allows the transmission of brake pressure to the wheel brakes (7), and the switching valve (17) connecting the return line (18) to the brake line (14) when the switching valve (17) is in the locking position which blocks the transmission of brake pressure to the wheel brakes (7).

## Revendications

1. Remorque de véhicule (1) comportant
- un dispositif de récupération d'énergie pour récupérer l'énergie générée par le freinage de la remorque de véhicule (1),
- un système de freinage à inertie comprenant un cylindre de frein hydraulique (13) et un dispositif hydraulique de transmission de force de freinage qui comporte une conduite de frein (14) pour transmettre la pression de freinage générée par le cylindre de frein (13) à des freins de roue (7),
- un dispositif de commande électronique (24),
- un dispositif de mesure de force en connexion électrique avec le dispositif de commande (24) pour mesurer des forces axiales du timon,
**caractérisé en ce que**
le dispositif hydraulique de transmission de force de freinage comprend une valve d'inversion (17) pour activer et désactiver le système de freinage à inertie, qui est mis en position de blocage par le dispositif de commande lorsque le dispositif de récupération d'énergie fonctionne correctement, lorsque la remorque de véhicule se déplace vers l'avant et lorsque la force de poussée du timon est inférieure à une certaine valeur limite de poussée du timon, position dans laquelle elle ferme la conduite de frein (14) entre le cylindre de frein (13) et les freins de roue (7), tandis que, lorsque la remorque de véhicule se déplace vers l'avant et que la force de poussée du timon est supérieure à cette valeur limite de poussée du timon, elle est commutée par le dispositif de commande jusque dans une position passante dans laquelle la conduite de frein (14) est ouverte pour transmettre la pression de freinage aux freins de roue (7).

2. Remorque de véhicule (1) selon la revendication 1,
**caractérisée en ce que** la valve d'inversion (17) est constituée d'une valve électromagnétique à plusieurs voies à rappel par ressort qui, lorsqu'elle est alimentée en courant électrique, peut être amenée jusque dans la position de blocage bloquant la transmission de la pression de freinage aux freins de roue (7) et qui, lorsqu'elle n'est pas alimentée, peut être amenée jusque dans la position passante permettant la transmission de la pression de freinage aux freins de roue (7), par une force de rappel par ressort.

3. Remorque de véhicule selon la revendication 1 ou 2,
**caractérisée en ce que** le dispositif de commande électronique (24) comprend une commande de valve pour commander la valve d'inversion (17) et une commande de récupération pour commander la récupération d'énergie, et
en cas de fonctionnement défectueux du dispositif de récupération d'énergie, lorsque la remorque de véhicule (1) se déplace vers l'avant, la commande de valve commute la valve d'inversion (17) jusque dans la position passante permettant la transmission de la pression de freinage aux freins de roue (7).

4. Remorque de véhicule selon la revendication 3,
**caractérisée en ce que** le dispositif de commande (24) commute la valve d'inversion (17) jusque dans la position de blocage bloquant la transmission de la pression de freinage aux freins de roue (7) lorsque la remorque de véhicule (1) est à l'arrêt ou en marche arrière, si un fonctionnement défectueux du dispositif de récupération d'énergie est détecté.

5. Remorque de véhicule selon l'une des revendications précédentes,
**caractérisée en ce que** la remorque de véhicule (1) présente un dispositif radar (28) relié au dispositif de commande électronique (24) pour détecter la marche avant, l'arrêt et la marche arrière de la remorque de véhicule (1).

6. Remorque de véhicule selon la revendication 5,
**caractérisée en ce que** le dispositif radar (28) est disposé dans ou sur un boîtier (29) dans lequel est également disposée la valve d'inversion (17).

7. Remorque de véhicule selon l'une des revendications précédentes,
**caractérisée en ce que** la valve d'inversion (17) est reliée à une conduite de retour (18) menant à un réservoir de liquide de frein (19), la valve d'inversion (17) bloquant une liaison entre la conduite de retour (18) et la conduite de frein (14), lorsque la valve d'inversion (17) se trouve dans la position passante permettant la transmission de la pression de freinage aux freins de roue (7), et
la valve d'inversion (17) relie la conduite de retour (18) à la conduite de freinage (14) lorsque la valve d'inversion (17) se trouve dans la position de blocage bloquant la transmission de la pression de freinage aux freins de roue (7).
